# EUROPÄISCHE PATENTSCHRIFT

(11) **EP 2 290 007 B1**
(45) Veröffentlichungstag und Bekanntmachung des Hinweises auf die Patenterteilung: **20.11.2013**
(21) Anmeldenummer: 10168879.4
(22) Anmeldetag: 08.07.2010
(51) Int. Cl.: C08L 83/04, C09D 183/04, C09J 183/04, C08K 5/098

(54) **Bei Raumtemperatur durch Kondensation vernetzende Siliconmassen**
Silicone materials which crosslink by condensation at room temperature
Masses de silicone mises en réseau par condensation à température ambiante

(30) Priorität: 31.07.2009 DE 102009028142
(43) Veröffentlichungstag der Anmeldung: 02.03.2011
(73) Patentinhaber: Wacker Chemie AG, 81737 München (DE)
(72) Erfinder: Sixt, Torsten, 84561, Mehring (DE); Neuhauser, Franz, 5132, Geretsberg (AT)
(74) Vertreter: Mieskes, Klaus Theoderich

(56) Entgegenhaltungen:
- EP-A1- 1 867 681
- EP-B1- 1 230 298

## Beschreibung

Die Erfindung betrifft bei Raumtemperatur durch Kondensation vernetzbare Massen, auf der Basis von Organosiliziumverbindungen, die zu dauerelastischen Materialien aushärten.

Unter Ausschluss von Wasser lagerfähige, bei Zutritt von Wasser unter Abspaltung von beispielsweise Alkoholen bei Raumtemperatur zu Elastomeren vernetzende Einkomponenten-Dichtmassen - auch als RTV-1-Dichtmassenbezeichnet - sind bekannt. Diese Produkte werden zum Beispiel in großen Mengen in der Bauindustrie eingesetzt.

Die Basis dieser RTV-1-Dichtmassen sind Polymere mit Silylgruppen, die reaktive Substituenten wie OH-Gruppen oder hydrolysierbare Alkoxygruppen aufweisen. Weiterhin können diese Dichtmassen verschiedene Füllstoffe, Weichmacher, Haftvermittler, Katalysatoren und so genannte Vernetzer bzw. weitere Zusätze wie zum Beispiel Farbpigmente, Rheologieadditive oder Fungizide enthalten.

Im Stand der Technik sind bereits diverse RTV-1-Massen bekannt. WO 01/49774 A2 und EP 1 254 192 B1 beschreiben beispielsweise Massen enthaltend diverse Titanester, Mischester und Titan-Chelate. Diese zeigen jedoch die bekannten Nachteile von Ti, wie beispielsweise Gelbfärbung, Oberflächenklebrigkeit, langsame Vulkanisationsgeschwindigkeit und Stabilitätsprobleme bei Lagerung. Ein weiterer Nachteil ist die Unverträglichkeit vieler Titanverbindungen mit gängigen Haftvermittlern auf Aminosilanbasis.

Es gibt verschieden Ansätze diese Probleme zu lösen. Bezüglich der Gelbfärbeproblematik werden Lösungen offenbart beispielsweise durch Zugabe von Organomerkaptanen als Additive in US 4,906,719. In EP 0 747 443 A2 und DE 42 13 873 A1 werden Titan-Komplexe mit Sauerstoffdonoren beschrieben, die eine reduzierte Gelbfärbung zeigen.

Um das Problem der Oberflächenklebrigkeit bzw. langsamen Vulkanisation zu lösen wird in EP 0 853 101 A1 eine Mischung beschrieben welche Alkoxysilane enthält und welche ein bestimmtes Mol-Verhältnis zwischen den einzelnen Edukten erfüllen müssen.

Um das Problem der geringen Lagerstabilität zu lösen, wird in DE 44 27 528 A1 der Einsatz von cyclisch-substituierten Komplexen auf Basis von Diolaten der Metalle der 4. Nebengruppe in Siliconzusammensetzungen beschrieben.

Um die Unverträglichkeit vieler Titanverbindungen mit gängigen Haftvermittlern auf Aminosilanbasis zu umgehen, wurden Methoden entwickelt, wie in DE 22 28 645 A1 und EP 1 209 201 A1 beschrieben, die auch die Verstrammung beim Kompoundieren vermeiden. Das hat jedoch den Nachteil, dass eine aufwändigere zweistufige Kompoundierreihenfolge notwendig wird.

Aus dem Stand der Technik wie beispielsweise DE 103 19 303 A1 und DE 10 2006 060 357 A1 sind RTV-1-Massen bekannt die weiterhin Dibutyl- oder Dioctylzinnverbindungen als Katalysatoren enthalten, da diese die Nachteile wie Gelbfärbung, geringe Lagerstabilität und insbesondere die Aminosilan-Unverträglichkeit nicht aufzeigen. Die Verwendung von Organozinn-Verbindungen ist jedoch mittlerweile umstritten, da dem Einsatz von Dibutyl- und Dioctylzinnverbindungen durch Änderung der EU-Richtlinie 76/769/EWG vom 28.05.2009 Einschränkungen auferlegt wurden.

Als Zinnfreies System wird in EP 1 230 298 A1 die Verwendung von Salzen des Zinn-, Zink-, Eisen-, Barium-, Zirkonium- und Blei - bevorzugt als Metallsalz-Carboxylate - sowie Metalloktoate aus der 1. und 2. Hauptgruppe beschrieben. Allen gemeinsam ist jedoch der Nachteil, dass es sich um langsame Katalysatoren handelt.

EP1867681 offenbart eine Siliconzusammensetzung enhaltend zwei miteinander kondensierbare siliziumenthaltende Verbindungen, einen Vernetzungsbeschleuniger, und eine Säure.

Aufgabe der vorliegenden Erfindung war daher die Bereitstellung von kondensationsvernetzenden Siliconzusammensetzungen, die eine schnelle Vernetzung erlauben und gleichzeitig keine Nachteile aufweisen wie beispielsweise Gelbfärbung, Oberflächenklebrigkeit, langsame Vulkanisationsgeschwindigkeit, Stabilitätsprobleme bei Lagerung oder die Unverträglichkeit mit gängigen Haftvermittlern auf Aminosilanbasis.

Im Rahmen der vorliegenden Erfindung soll die Bezeichnung "Kondensationsreaktion" auch einen gegebenenfalls vorangehenden Hydrolyseschritt mit umfassen.

Im Rahmen der vorliegenden Erfindung sollen unter der Bezeichnung "kondensationsfähige Reste" auch solche Reste verstanden werden, aus denen in einem gegebenenfalls vorangehenden Hydrolyseschritt kondensationsfähige Gruppen erzeugt werden.

Gegenstand der vorliegenden Erfindung sind daher Kondensationsvernetzende Siliconzusammensetzungen enthaltend
(A) mindestens eine Organosiliciumverbindung mit wenigstens 2 kondensationsfähigen Gruppen,
(B) mindestens einen Vernetzer,
(C) mindestens einen Füllstoff,
(E) mindestens einen Katalysator in katalytischen Mengen, **dadurch gekennzeichnet, dass** er ausgewählt wird aus der Gruppe enthaltend Metallverbindungen der I. und II. Haupt- und Nebengruppe,
(F) mindestens eine anorganische Säure, dadurch gekennzeichnet, dass die anorganische Säure (F) Phosphorsäure oder/und Phosphorsäure oder/und deren Derivate sind.

In einer weiteren Ausführungsform enthalten die erfindungsgemäßen, kondensationsvernetzenden Siliconzusammensetzungen als weiteren Bestandteil mindestens einen Haftvermittler (D).

Bei den kondensationsfähigen Gruppen, welche die eingesetzten, an der Vernetzungsreaktion beteiligten Organosiliciumverbindungen (A) aufweisen, kann es sich um beliebige Gruppen handeln, wie z.B. Hydroxy-, Oximato-, Amino-,Acyloxy- und Organyloxygruppen.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R"-Si≡ -Strukturen mit R" gleich einem zweiwertigen, gegebenenfalls substituierten oder mit Heteroatomen unterbrochenen Kohlenwasserstoffrest oder beliebigen Organosiliciumgruppen aufweisende Polymere und Copolymere handeln.

Bevorzugt handelt es sich bei erfindungsgemäß eingesetzten Organosiliciumverbindungen (A) um solche der Formel (II)

Y_{3-f}R_{f}Si-(SiR₂-O)ₑ-SiR_{f}Y_{3-f} (II),

wobei
R unabhängig voneinander gleiche oder verschiedene, substituierte oder unsubstituierte Kohlenwasserstoffreste, die durch Sauerstoffatome unterbrochen sind oder nicht,
Y unabhängig voneinander gleich oder verschiedene Hydroxylreste oder hydrolysierbare Reste,
e gleich 30 bis 3000 ist und
f gleich 0, 1 oder 2 ist.

Vorzugsweise ist f gleich 2, wenn Y gleich -OH ist, und f gleich 1 oder 0, wenn Y gleich verschieden -OH ist.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest.

Beispiele für zweiwertige Reste R sind Polyisobutylendiylreste und propandiylterminierte Polypropylenglykolreste.

Beispiele für Reste Y sind der Hydroxylrest sowie alle bisher bekannten hydrolysierbaren Reste, wie z.B. über Sauerstoffatom oder Stickstoffatom an Siliciumatom gebundene, gegebenenfalls substituierte Kohlenwasserstoffreste.

Bevorzugt handelt es sich bei Rest Y um Hydroxylrest, Rest -OR¹, wobei R¹ substituiere oder unsubstituierteKohlenwasserstoffreste, die durch Sauerstoffatome unterbrochen sein können, bedeutet. Beispiele für Y sind Methoxy-, Ethoxy-, n-Propoxy-, i-Propoxy-, n-Butoxy-, i-Butoxy-, s-Butoxy-, tert-Butoxy- und 2-Methoxyethoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Dimethylketoximo-, Methylethylketoximo- und Methylisobutylketoximorest, und Enoxyreste, wie der 2-Propenoxyrest sowie Acyloxyreste wie beispielsweise Acetylgruppen.

Beispiele für Reste R¹ sind die für R angegebenen einwertigen, gegebenenfalls substituierten Kohlenwasserstoffreste.

Bevorzugt handelt es sich bei Rest R¹ um Alkyl- oder Acylreste mit 1 bis 12 Kohlenstoffatomen, besonders bevorzugt um Reste mit 1 bis 3 Kohlenstoffatomen.

Besonders bevorzugt handelt es sich bei Rest Y um Hydroxylrest und Rest -OR¹ mit R¹ gleich der obengenannten Bedeutung, insbesondere ist bevorzugt für R¹ Methyl- und Ethylreste sowie der Acetylrest. Beispiele für Organosiliciumverbindungen (A) sind
(MeO)₂MeSiO[SiMe₂O]₂₀₀₋₂₀₀₀SiMe(OMe)₂,
(MeO)(EtO)MeSiO[SiMe₂O]₂₀₀₋₂₀₀₀SiMe(OMe)(OEt),
(MeO)₂MeSiO[SiMe₂O]₂₀₀₋₂₀₀₀SiMe(OEt)₂,
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,

(MeO)₂ViSiO[SiMe₂O]₂₀₀-₂₀₀₀SiVi(OMe)₂
(MeO)₂MeSiO[SiMe₂O]₂₀₀₋₂₀₀₀SiVi(OMe)₂ und
(EtO)₂ViSiO[SiMe₂O]₂₀₀₋₂₀₀₀SiVi(OEt)₂ ,

(AcO)₂ViSiO[SiMe₂O]₂₀₀₋₂₀₀₀Sivi(OAC)₂,
(AcO)₂MeSiO[SiMe₂O]₂₀₀₋₂₀₀₀SiVi(OAc)₂ und
(AcO)₂EtSiO[SiMe₂O]₂₀₀₋₂₀₀₀SiEt(OAc)₂ ,
wobei Me Methylrest, Et Ethylrest, Vi Vinylrest und Ac Acetylrest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Bei den in den erfindungsgemäßen Siliconzusammensetzungen eingesetzten Vernetzern (B) kann es sich um beliebige, bisher bekannte Vernetzer mit mindestens drei kondensationsfähigen Resten handeln, wie beispielsweise Silane oder Siloxane mit mindestens drei Organyloxygruppen.

Bei den in den erfindungsgemäßen Siliconzusammensetzungen eingesetzten Vernetzern (B) handelt es sich vorzugsweise um Organosiliciumverbindungen der allgemeinen Formel (III)

Z_{c}SiR²_{(4-c)} (III),

wobei
R² gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und eine oben für Y genannte Bedeutung ausgenommen Hydroxylgruppe besitzt und c 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der allgemeinen Formel (III), wie auch um Teilcohydrolysate, d.h. Teilhydrolysate von mindestens zwei verschiedenen Arten von Organosiliciumverbindungen der allgemeinen Formel (III).

Obwohl in Formel (III) nicht angegeben, können die erfindungsgemäß eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen eingesetzten Vernetzern (B) um Teilhydrolysate von Organosiliciumverbindungen der Formel (III), so sind solche mit bis zu 10 Siliciumatomen bevorzugt.

Beispiele für Rest R² sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele ausgenommen Hydroxylgruppe.

Bevorzugt handelt es sich bei den in den erfindungsgemäßen Massen eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis(trimethoxysilyl)ethan, 1,2-Bis(triethoxysilyl)ethan, Methyltris(methylethylketoximo)-silan, Vinyltris(methylethylketoximo)silan und Tetrakis-(methylethylketoximo)silan sowie Teilhydrolysate der genannten Organosiliciumverbindungen, wie z.B. Hexaethoxydisiloxan sowie Acyloxysilanen, wie beispielsweise Vinyltrisacetoxysilan, Methyltriacetoxysilan oder Ethyltrisacetoxysilan und deren Teil- und Mischhydrolysate.

Besonders bevorzugt handelt es sich bei den in den erfindungsgemäßen Massen eingesetzten Vernetzern (B) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, Methyltris(methylethylketoximo)silan, Vinyltris(methylethylketoximo)silan sowie deren Teilhydrolysate, insbesondere um Methyltrimethoxysilan, Vinyltriethoxysilan, Methyltris(methylethylketoximo)silan und Vinyltris(methylethylketoximo)silan sowie deren Teilhydrolysate und vinyltrisacetoxysilan, Methyltriacetoxysilan oder Ethyltrisacetoxysilan und deren Teil- und Mischhydrolysate.

Die in den erfindungsgemäßen Massen eingesetzten Vernetzer (B) sind handelsübliche Produkte bzw. können nach in der Siliciumchemie bekannten Verfahren hergestellt werden.

Die erfindungsgemäßen Vernetzer (B) werden vorzugsweise in Mengen von 1 bis 10 Gewichtsteilen, besonders bevorzugt 2 bis 8 Gewichtsteilen, insbesondere 3 bis 5 Gewichtsteilen, jeweils bezogen auf 100 Gewichtsteile vernetzbare Masse eingesetzt.

Als erfindungsgemäße Füllstoffe (C), können alle Füllstoffe eingesetzt werden, die auch bisher zur Bereitung von RTV-1-Massen eingesetzt worden sind. Beispiele für Füllstoffe (C) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver, sowie verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche, sowie faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bei den Füllstoffen (C) handelt es sich bevorzugt um pyrogene Kieselsäure, gecoatete oder ungecoatete Calciumcarbonate, Metallsilikate, Quartz oder Ruße.

Füllstoffe (C) wird bevorzugt in Mengen von 5 bis 50 Gewichtsteile, besonders bevorzugt 7 bis 35 Gewichtsteile, eingesetzt jeweils bezogen auf 100 Gewichtsteile vernetzbare Masse.

Beispiele für die in den erfindungsgemäßen Massen eingesetzten Haftvermittler (D) sind Silane und Organopolysiloxane mit funktionellen Gruppen, wie beispielsweise solche mit Glycidoxy-, Amino- oder Methacryloxyresten. Des Weiteren können als Haftvermittler (D) auch Silane mit hydrolysierbaren Gruppen und SiC-gebundenen Vinyl-, Acryloxy-, Methacryloxy-, Epoxy-, Säureanhydrid-, Säure-, Ester- oder Ethergruppen sowie deren Teil- und Mischhydrolysate verwendet werden. Bevorzugt als Haftvermittler sind Amino-, acryl- und epoxifunktionelle Silane mit hydrolysierbaren Gruppen und deren Teilhydrolysate.

Die erfindungsgemäßen Siliconzusammensetzungen enthalten Haftvermittler (D) in Mengen von vorzugsweise 0 bis 50 Gewichtsteilen, besonders bevorzugt 0,1 bis 20 Gewichtsteilen, insbesondere 0,5 bis 10 Gewichtsteilen, jeweils bezogen auf 100 Gewichtsteile Organosiliciumverbindung (A).

Der erfindungsgemäße Katalysator (E) wird ausgewählt aus der Gruppe enthaltend Metallverbindungen der I. und II. Haupt- und Nebengruppe. Somit kommen Verbindungen von Li, Na, K, Rb, Cs, Be, Mg, Ca, Sr, Ba, Cu, Ag, Au, Zn, Cd und Hg zum Einsatz. Bevorzugt sind Li und Sr.

Bevorzugt handelt es sich beim Katalysator (E) um Metallsalze der I. und II. Haupt- und Nebengruppe. Besonders bevorzugt sind als Katalysator (E) reine Carboxylate, insbesondere sind Li- und Sr-Carboxylate bevorzugt.

Die erfindungsgemäßen Siliconzusammensetzungen enthalten Katalysator (E) in Mengen von vorzugsweise 0,1 bis 1,0 Gewichtsteile bezogen auf 100 Gewichtsteile vernetzbare Masse.

Die erfindungsgemäßen Verbindungen (F) kann man auch als CO-Katalysator bezeichnen. Die anorganische Säuren sind Phosphorsäure oder/und Phosphorsäure oder/und deren Derivate oder deren Mischungen, bevorzugt mit einem pKs1 < 4, wie beispielsweise Phosphorsäure und deren Derivate wie beispielsweise Teilester, Phosphonsäure sowie substitutierte Phosphonsäuren (Aryl- und Alkylphosphonsäure) und deren Derivate z.B. Teilester. Bevorzugt werden Phosphonsäuren und deren Derivate. Besonders bevorzugt werden Alkylphosphonsäuren wie beispielsweise Octylphosphonsäure.

Die erfindungsgemäßen Siliconzusammensetzungen enthalten anorganische Säuren (F) in Mengen von vorzugsweise 0,1 bis 5 Gewichtsteile, besonder bevorzugt 0,1 bis 2 Gewichtsteile jeweils bezogen auf 100 Teile vernetzbare Mischung.

Zusätzlich zu den oben beschriebenen Komponenten (A) bis (F) können die erfindungsgemäßen Siliconzusammensetzungen auch alle weiteren Bestandteile enthalten, die auch bisher im Stand der Technik in durch Kondensationsreaktion vernetzbaren Massen eingesetzt wurden. Beispiele für weitere Bestandteile, die bei den erfindungsgemäßen Zusammensetzungen verwendet werden können, sind Weichmacher, Härtungsbeschleuniger (die von den oben genannten Komponenten unterschiedlich sind), lösliche Farbstoffe, anorganische und organische Pigmente, Lösungsmittel, Fungicide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel und Mittel zur Beeinflussung der elektrischen Eigenschaften.

Die erfindungsgemäßen Siliconzusammensetzungen können solche weiteren Bestandteile in Mengen bis 60 Gewichtsteilen bezogen auf 100 Teile vernetzbarer Masse enthalten.

Bei einem Verfahren zur Herstellung der erfindungsgemäßen Zusammensetzungen können alle Bestandteile in üblicher, und somit dem Stand der Technik entsprechender Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bei den einzelnen Bestandteilen der erfindungsgemäßen Zusammensetzungen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser, durchgeführt werden.

Vorzugsweise erfolgt die Vernetzung bei einem Druck von 100 bis 1100 hPa, insbesondere beim Druck der umgebenden Atmosphäre, also etwa 900 bis 1100 hPa.

Die erfindungsgemäßen Siliconzusammensetzungen eigenen sich als Klebstoffe, Dichtungsmassen, Überzüge, und zum Komponentenverguss.

Der Vorteil der erfindungsgemäßen Siliconzusammensetzungen enthaltend Metallsalze der 1 und 2. Haupt- und Nebengruppe (E) in Verbindung mit den erfindungsgemäßen, sauren Co-Katalysators (F) liegt in einem deutlich schnelleren Härtungsverlauf als ohne den Co-Katalysator. Es konnte eine klare Abhängigkeit zwischen Hautbildungszeit und der Säurestärke (pKs1-Wert) des Co-Katalysators festgestellt werden. Zudem treten keine Nachteile wie Gelbfärbung, geringe Lagerstabilität oder die Aminosilan-Unverträglichkeit auf.

Die erfindungsgemäß hergestellten Zusammensetzungen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Dichtungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen. Ebenso können solche Massen im technischen Bereich wie der Abdichtung von Gehäusen, Steuergeräten, Anlagen- und Motorteilen, dem Verguss von Komponenten oder auch als Schutzcoating verwendet werden.

### Beispiele

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiele für die Kombination von Metalloktoaten mit Brönsted-Säure als Co-Katalysator

### ALKOXY-RTV-1

### 1) Polymergrundmischung:

Es wurden 600g α,ω-OH-endständiges Polydimethylsiloxan mit einer Viskosität von 80.000 mPas, 120g trimethylsilylendständiges Polydimethylsiloxan mit einer Viskosität von 100 mPas und 30g Vinyltrimethoxysilan und 0,3 g Zinkacetylacetonat vermischt. Nach 24h ist die Endblockierung abgeschlossen.

Vergleichsmischung 1) nach Beispiel F von EP 1 230 298 B1: Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler zugegeben und anschließend mit 0,1g Dibutylzinnlaurat (=DBTL) katalysiert.

Vergleichsmischung 2) mit Octasoligem Zink nach EP 1 230 298 B1: Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler zugegeben und anschließend mit 2,5g Octasoligem Zink 18 (Zn(Oct)2) (Borchers) katalysiert.

### Beispiel 1)

Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler zugegeben, hierzu 0,75g 2-Ethylhexansäure und anschließend mit 2,5g Zinkoktoat 18 (erhältlich als Octasoligen Zink 18, der Firma OMG (Monheim, Deutschland) katalysiert.

### Beispiel 2)

Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler zugegeben, hierzu 1g Octylphosphonsäure (=OPS) und anschließend mit 2,5g Oktasoligen Zink 18, der Firma OMG (Monheim, Deutschland) katalysiert.

### Beispiel 3

Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler zugegeben und anschließend mit 3g Oktasoligen Lithium 2 (Li(Oct)) der Firma OMG (Monheim, Deutschland) katalysiert.

### Beispiel 4

Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler, 1g Oktylphosphonsäure zugegeben und anschließend mit 3g Oktasoligen Lithium 2 der Firma OMG (Monheim, Deutschland) katalysiert.

### Beispiel 5

Hierzu wurden in 300g der Polymergrundmischung 19,5g Wacker HDK V15 eingearbeitet und glatt gerührt. Dazu wurden 2,5g 3-Aminopropyltrimethoxysilan als Haftvermittler, 0,75g 2-Ethylhexansäure zugegeben und anschließend mit 3g Oktasoligen Lithium 2 der Firma OMG (Monheim, Deutschland) katalysiert.

### ACETOXY-RTV-1

### Herstellung einer Grundmischung:

In 45 Teile eines α,ω-OH-endständiges Polydimethylsiloxan mit einer Viskosität von 20.000 mPas und 35 Teile eines α ,ω-OH-endständiges Polydimethylsiloxan mit einer Viskosität von 80.000 mPas wurden 22 Teile einer hydrophobierten pyrogenen Kieselsäure eingearbeitet und homogen geknetet.

### Beispiel 6

In 100g der Polymergrundmischung wurden 38g eines α ,ω-OH-endständiges Polydimethylsiloxans mit einer Viskosität von 6.000 mPas sowie 6,8g Methyltrisacetoxysilan zugegeben. Die Mischung wurde homogenisiert, dann mit 1,1 Teilen Oktasoligem Strontium 10 (Sr(Oct)2), der Firma OMG (Monheim, Deutschland)) als Katalysator versetzt.

### Beispiel 7

Wie 6), jedoch unter Zugabe von 0,3 Teilen Octylphosphonsäure

### Beispiel 8

wie 6), jedoch wurde als Katalysator 1,1 Teile Oktasoligen Lithium 2 der Firma OMG (Monheim, Deutschland) eingesetzt

### Beispiel 9

wie 7, jedoch wurde als Katalysator 1,1 Teile Oktasoligen Lithium 2 der Firma OMG (Monheim, Deutschland) eingesetzt

### Beispiel 10

wie 6, jedoch wurde als Katalysator 1,1 Teile Oktasoligen Zink 18 der Firma OMG (Monheim, Deutschland) eingesetzt

### Beispiel 11

wie 7) jedoch wurde als Katalysator 1,1 Teile Oktasoligen Zink 18 eingesetzt

Die Tabelle 1 zeigt die Ergebnisse der Hautbildungszeit (=HBT) in Minuten (=min). Sie wurde wie folgt bestimmt: Nach dem Ausbringen der RTV-1 Masse aus einer Kartusche wird die Bildung einer Haut durch Berühren der Oberfläche mit einem Bleistift der Härte HB beurteilt. Der Zeitraum bis sich kein Faden mehr zwischen der Masse und der Bleistiftspitze zieht, gilt als Hautbildungszeit.

Zudem wurde die Vulkanisationsbeurteilung in der Tabelle 1 wiedergegeben. Sie wurde wie folgt bestimmt: Nach dem Ausbringen der RTV-1 Masse aus einer Kartusche wird die Oberflächenklebrigkeit durch andrücken und abziehen einer PE-Folie begutachtet. Positiv im Fall von Klebfreiheit nach doppelter Hautbildungszeit. In einem weiteren Schritt wird der Verlauf der Durchhärtung, bei standfesten Massen im 10mm-Strang, bei fließfähigen Massen im Alubecher (28mm Durchmesser, 20mm Höhe) beurteilt. Positive Beurteilung bei klebefreier Durchhärtung.

**Tabelle 1**

| Mischung | Katalysator | Hautbildung [min] | Vulkanisationsbeurteilung |
|---|---|---|---|
| Vergleichsmis chung 1 | DBTL | 10 | gut, klebefrei |
| Vergleichsmis chung 2 | Zn(Oct)2 | 400 | schlecht, nach 48h klebrig |
| Beispiel 1 | Zn(Oct)2 + Oktansäure | 120 | gut, n.24h noch leicht klebrig |
| Beispiel 2* | Zn(Oct)2 + OPS | 40 | gut |
| Beispiel 3 | Li(Oct) | 175 | gut, nach 24h leicht klebrig |
| Beispiel 4* | Li(Oct) + OPS | 40 | gut |
| Beispiel 5 | Li(Oct) + Oktansäure | 75 | gut |
| Beispiel 6 | Sr(Oct)2 | 30 | gut |
| Beispiel 7* | Sr(Oct)2 + OPS | 15 | gut |
| Beispiel 8 | Li(Oct) | 17 | gut |
| Beispiel 9* | Li(Oct) + OPS | 12 | gut |
| Beispiel 10 | Zn(Oct)2 | 27 | gut |
| Beispiel 11* | Zn(Oct)2 + OPS | 23 | gut |

| | | | |
|---|---|---|---|
| erfindungsgemäß* | | | |

Dibutylzinn-Katalysatoren (=DBTL) gemäß Vergleichbeispiel 1 sind sehr reaktiv und zeigen üblicherweise Hautbildungszeiten von 10-40 Minuten. Die in EP 1 230 298 A1 beschriebenen Oktasoligen Zink(=Zn(Oct)) führen in der beschriebenen weise nach Vergleichsbeispiel 2 zu keinem zufriedenstellenden Ergebnis. Erst durch Zugabe des erfindungsgemäßen sauren Co-Katalysators gemäß Beispiel 2 erhält man einen akzeptablen Härtungsverlauf.

Mit den erfindungsgemäßen beanspruchten Oktoaten aus der 1. und 2. Hauptgruppe des Periodensystems in Verbindung mit einem erfindungsgemäßen, sauren Co-Katalysators erhält man einen deutlich besseren Härtungsverlauf als mit den Oktoaten der 1. und 2. Hauptgruppe alleine.

Es zeigt sich ein klarer Trend zu kürzeren Hautbildungszeiten vor allem bei Oktasoligem Strontium und -Lithium.

## Patentansprüche

1. Kondensationsvernetzende Siliconzusammensetzungen enthaltend
(A) mindestens eine Organosiliciumverbindung mit wenigstens 2 kondensationsfähigen Gruppen,
(B) mindestens einen Vernetzer,
(C) mindestens einen Füllstoff,
(E) mindestens einen Katalysator in katalytischen Mengen, **dadurch gekennzeichnet, dass** er ausgewählt wird aus der Gruppe enthaltend Metallverbindungen der I. und II. Haupt- und Nebengruppe,
(F) mindestens eine anorganische Säure,
**dadurch gekennzeichnet, dass** die anorganische Säure (F) Phosphorsäure oder/und Phosphonsäure oder/und deren Derivate sind.

2. Siliconzusammensetzungen gemäß Anspruch 1, **dadurch gekennzeichnet, dass** sie als weiterer Bestandteil mindestens einen Haftvermittler (D) enthalten.

3. Siliconzusammensetzungen gemäß Anspruch 1 oder 2, **dadurch gekennzeichnet, dass** als Katalysator (E) Carboxylate der I. und II. Haupt- und Nebengruppe verwendet werden.

4. Verfahren zur Herstellung der erfindungsgemäßen Zusammensetzungen gemäß einem der Ansprüche 1 bis 3, **dadurch gekennzeichnet, dass** alle Bestandteile miteinander vermischt werden.

5. Verwendung der Siliconzusammensetzungen gemäß einem der Ansprüche 1 bis 3 als Klebstoffe, Dichtungsmassen, Überzügen, zum Komponentenverguss.

## Claims

1. Condensation-crosslinking silicone compositions containing
(A) at least one organosilicon compound having at least 2 condensable groups,
(B) at least one crosslinking agent,
(C) at least one filler,
(E) at least one catalyst in catalytic amounts, **characterized in that** it is selected from the group consisting of metal compounds of main and subgroups I and II,
(F) at least one inorganic acid,
**characterized in that** the inorganic acid (F) is phosphoric acid and/or phosphonic acid and/or derivatives thereof.

2. Silicone compositions according to Claim 1, **characterized in that** they contain at least one adhesion promoter (D) as a further constituent.

3. Silicone compositions according to Claim 1 or 2, **characterized in that** carboxylates of main and subgroups I and II are used as catalyst (E).

4. Process for the preparation of the compositions according to the invention and according to any of Claims 1 to 3, **characterized in that** all constituents are mixed with one another.

5. Use of the silicone compositions according to any of Claims 1 to 3 as adhesives, sealing compounds and coatings and for the potting of components.

## Revendications

1. Compositions de silicone réticulables par condensation, contenant
(A) au moins un composé organosilicié comportant au moins 2 groupes condensables,
(B) au moins un agent de réticulation,
(C) au moins une charge,
(E) au moins un catalyseur en quantités catalytiques, **caractérisé en ce qu'**il est choisi dans le groupe contenant des composés métalliques des groupes IA et IIA, IB et IIB,
(F) au moins un acide inorganique,
**caractérisées en ce que** l'acide inorganique (F) consiste en acide phosphorique et/ou acide phosphonique et/ou leurs dérivés.

2. Compositions de silicone selon la revendication 1, **caractérisées en ce qu'**elles contiennent comme autre constituant au moins un promoteur d'adhérence (D).

3. Compositions de silicone selon la revendication 1 ou 2, **caractérisées en ce qu'**on utilise comme catalyseur (E) des carboxylates des groupes IA et IIA, IB et IIB,

4. Procédé pour la préparation des compositions selon l'invention selon l'une quelconque des revendications 1 à 3, **caractérisé en ce qu'**on mélange entre eux tous les constituants.

5. Utilisation des compositions de silicone selon l'une quelconque des revendications 1 à 3, en tant qu'adhésifs, matières d'étanchéité, revêtements, pour la coulée de composants.
